# EUROPEAN PATENT APPLICATION

(11) **EP 2 565 978 A1**
(43) Date of publication of application: **06.03.2013**
(21) Application number: 11774553.9
(22) Date of filing: 02.02.2011
(51) Int. Cl.: H01M 10/50, H01M 2/10

(54) **BATTERY MODULE**

(30) Priority: 28.04.2010 JP 2010103329
(71) Applicant: Panasonic Corporation, Kadoma-shi Osaka 571-8501 (JP)
(72) Inventor: NAKASHIMA, Takuya, OSAKA-SHI, OSAKA 540-6207 (JP); YASUI, Shunsuke, OSAKA-SHI, OSAKA 540-6207 (JP)
(74) Representative: Grünecker, Kinkeldey, Stockmair & Schwanhäusser
(86) International application number: PCT/JP2011/000569
(87) International publication number: WO 2011/135762

(57) **Abstract**

A battery module including a unit cell and a temperature regulator (25, 26, 27, 28) for regulating the temperature of the unit cell (100) is constructed by connecting a plurality of the unit cells (100) in parallel to form an assembled battery (200), and then connecting a plurality of the assembled batteries (200) in series. The temperature regulator is located so as to regulate the temperature of at least one unit cell in each of the assembled batteries, whereby at least one of the unit cells connected in series can start to discharge. Accordingly, a current sufficient to start a vehicle or the like can be discharged early with reduced power consumption.

## Description

### TECHNICAL FIELD

The present invention relates to battery modules, and particularly relates to a battery module including a plurality of unit cells that are secondary cells and a temperature regulator for partially regulating the temperatures of the unit cells.

### BACKGROUND ART

Battery packs that include a plurality of cells housed in a case and that are configured to output a predetermined voltage and capacitance are widely used as a power source for various devices, vehicles, and the like. In particular, a technique is beginning to be employed, in which assembled batteries that include general-purpose cells connected in parallel or series and that output a predetermined voltage and capacitance are constructed into modules, and the battery modules are combined in various ways so as to be applicable to a wide variety of uses. This modularization technique has various advantages. For example, since the size and weight of the battery modules can be reduced by improving the performance of the cells included in the battery modules, the workability in assembling a battery pack is improved, and the degree of freedom in mounting the battery pack into a limited space in a vehicle or the like is also increased.

For example, battery modules as described above that use lithium-ion secondary cells have been developed as a power source for vehicles. Not only lithium-ion secondary cells but also other types of cells have an optimal operating temperature range, and therefore battery modules need to be equipped with a device for regulating temperature.

For example, Patent Literature 1 gives a description of a mechanism for regulating temperature.

Patent Literature I discloses a technology relating to a pack battery including: an inner case in which a plurality of cells arranged so as to be parallel to each other are housed; a lead plate made of metal which is placed on a lead plate placement surface of the inner case, which is connected to electrodes on both ends of the cells, and which connects each cell to adjacent cells; an outer case in which the inner case is housed; and a sheet heater which is placed between the inner case and the outer case to heat the cells, the sheet heater being placed on the lead plate placement surface of the inner case so as to heat the cells via the lead plate made of metal.

### CITATION LIST

### [PATENT LITERATURE]

[PTL 1] Japanese Laid-Open Patent Publication No. 2007-213939

### SUMMARY OF THE INVENTION

### PROBLEMS TO BE SOLVED BY THE INVENTION

However, the technology disclosed in Patent Literature 1 is for heating the whole of a battery module to a uniform temperature in cold climates, and does not take into account power consumption required for the heating by the sheet heater and early discharge of the battery module.

According to the structure disclosed in Patent Literature 1, when, for example, a vehicle is started in cold climates, the whole of a battery module is heated, and thus power consumption for the extensive heating is required. In addition, discharge is not initiated unless all of the unit cells connected in series are heated. Therefore, discharge cannot be initiated early.

The present invention has been made to solve the conventional problems, and an object of the present invention is to provide a battery pack in which power consumption required for temperature regulation is suppressed and discharge of a battery module can be initiated early.

### SOLUTION TO THE PROBLEMS

In order to solve the conventional problems, a battery module of the present invention includes a unit cell and a temperature regulator for regulating the temperature of the unit cell, and in the battery module, a plurality of the unit cells are connected in parallel to form an assembled battery, a plurality of the assembled batteries are connected in series, and the temperature regulator is located so as to regulate the temperature of at least one unit cell in each of the assembled batteries.

The above structure makes it possible that unit cells of which the temperatures are regulated are connected in series in a battery module, and thus allows discharge to be initiated early.

### ADVANTAGEOUS EFFECTS OF THE INVENTION

In the battery module of the present invention, the temperature regulator is provided only for some of the unit cells in each of the assembled batteries. Therefore, a current sufficient to start a vehicle or the like can be discharged early with reduced power consumption.

### BRIEF DESCRIPTION OF THE DRAWINGS

[FIG 1] FIG. 1 is a cross-sectional view schematically showing the structure of a unit cell used in a battery module according to an embodiment of the present invention.
[FIG. 2] FIG_{.} 2 is an exploded perspective view schematically showing the structure of an assembled battery according to an embodiment of the present invention.
[FIG. 3] (a) of FIG. 3 is a perspective view of an assembled battery according to an embodiment of the present invention, (b) of FIG 3 is a cross-sectional view of the assembled battery, and (c) of FIG. 3 is a partially enlarged view of a portion represented by A in (b).
[FIG. 4] (a) to (f) of FIG. 4 are exploded perspective views schematically showing the structure of a battery module according to an embodiment of the present invention.
[FIG. 5] (a) and (b) of FIG. 5 are a conceptual diagram and a circuit diagram, respectively, of a battery module according to an embodiment of the present invention.
[FIG. 6] FIG. 6 is a perspective view of a battery module according to an embodiment of the present invention.
[FIG. 7] FIG. 7 is a schematic diagram showing an example in which a battery pack including a plurality of battery modules is mounted in an automobile.
[FIG. 8] (a) to (g) of FIG. 8 are exploded perspective views schematically showing the structure of another type of battery module according to an embodiment of the present invention.
[FIG. 9] (a) and (b) of FIG. 9 are a conceptual diagram and a circuit diagram, respectively, of another type of battery module according to an embodiment of the present invention.
[FIG. 10] (a) and (b) of FIG. 10 are a conceptual diagram and a circuit diagram, respectively, of another type of battery module according to an embodiment of the present invention.
[FIG. 11] (a) and (b) of FIG. 11 are a conceptual diagram and a circuit diagram, respectively, of still another type of battery module according to an embodiment of the present invention.

### DESCRIPTION OF EMBODIMENTS

Hereinafter, an embodiment of the present invention will be described with reference to the drawings.

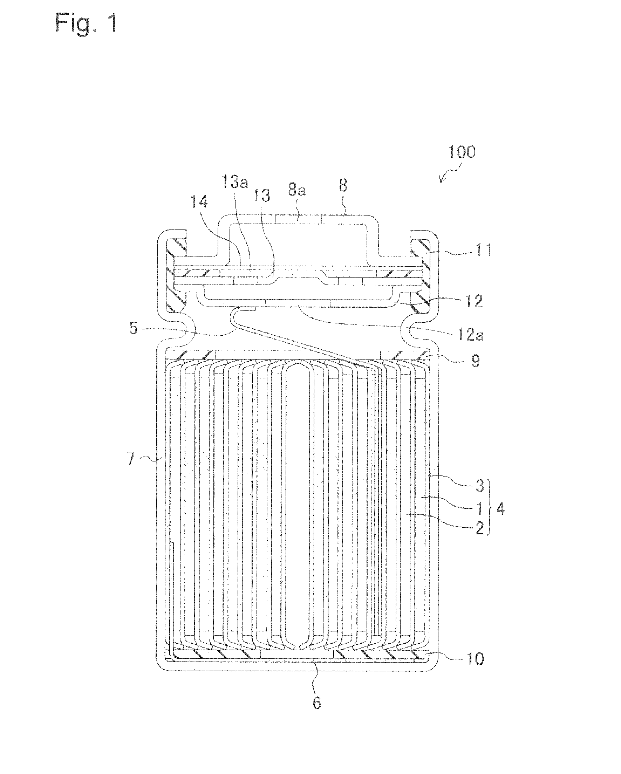

FIG. 1 is a cross-sectional view schematically showing the structure of a cell (hereinafter referred to as a "unit cell") 100 used in a battery module according to an embodiment of the present invention. A battery pack according to the present is constructed as an assembly of battery modules each of which is formed by arranging a plurality of assembled batteries each of which is a unit of the battery module and includes a plurality of unit cells 100 arranged in a row.

For example, a cylindrical lithium-ion secondary cell as shown in FIG. 1 can be used as the unit cell 100 included in the assembled battery according to the present invention. The lithium-ion secondary cell may be a general-purpose cell used as a power source for portable electronic devices such as lap-top personal computers. In this case, since a general-purpose cell with high performance can be used as the unit cell in the battery module, improvement of the performance of the battery module and cost reduction can be achieved more easily. Further, the unit cell 100 is equipped with a safety mechanism for releasing gas to the outside of the cell when the pressure inside the cell is increased due to occurrence of internal short-circuit or the like. Hereinafter, the structure of the unit cell 100 will be specifically described with reference to FIG. 1.

As shown in FIG. 1, an electrode group 4 in which a positive electrode 1 and a negative electrode 2 are wound with a separator 3 interposed therebetween is housed in a cell case 7 along with a non-aqueous electrolyte. Insulating plates 9 and 10 are provided at the top and bottom of the electrode group 4, respectively. The positive electrode 1 is connected to a filter 12 via a positive electrode lead 5, while the negative electrode 2 is connected via a negative electrode lead 6 to the bottom of the cell case 7 which also serves as a negative terminal.

The filter 12 is joined to an inner cap 13, and a protrusion of the inner cap 13 is joined to a vent body 14 made of metal. Further, the vent body 14 is joined to a terminal plate 8 which also serves as a positive terminal. The opening of the cell case 7 is sealed with the terminal plate 8, the vent body 14, the inner cap 13, and the filter 12 which are integrated with each other, via a gasket 11.

When internal short-circuit or the like occurs in the unit cell 100 and the pressure inside the unit cell 100 is increased, the vent body 14 swells toward the terminal plate 8, and the inner cap 13 and the vent body 14 are detached from each other, and thus the current path is cut off. If the pressure inside the unit cell 100 is further increased, the vent body 14 is broken. As a result, the gas generated inside the unit cell 100 is exhausted to the outside through a through hole 12a of the filter 12, a through hole 13a of the inner cap 13, a break in the vent body 14, and an open part 8a of the terminal plate 8.

The structure of the safety mechanism for exhausting gas generated in the unit cell 100 to the outside is not limited to that shown in FIG. 1, and the safety mechanism may have a different structure.

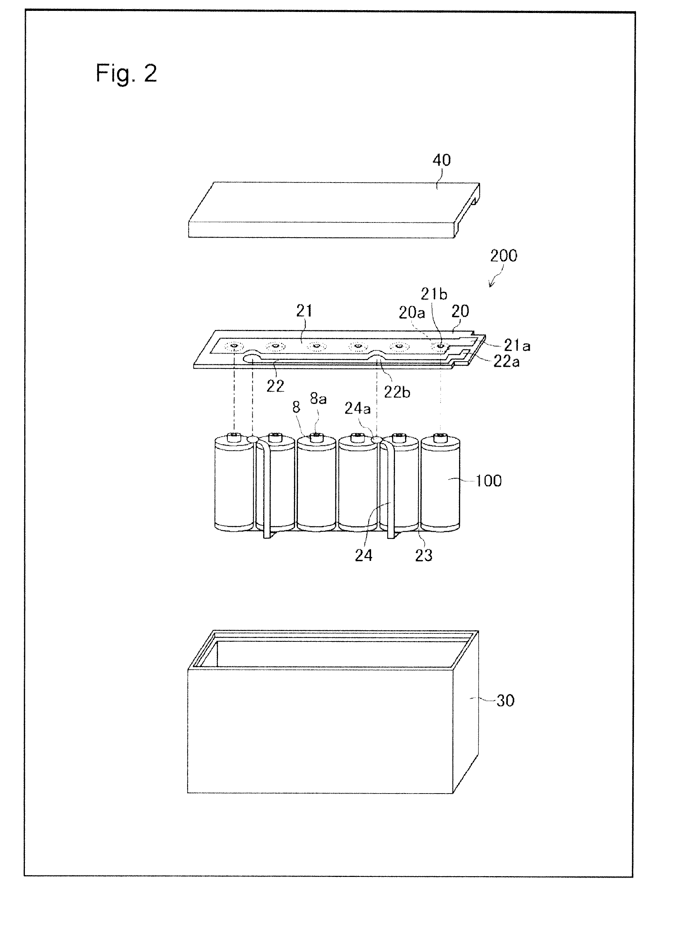

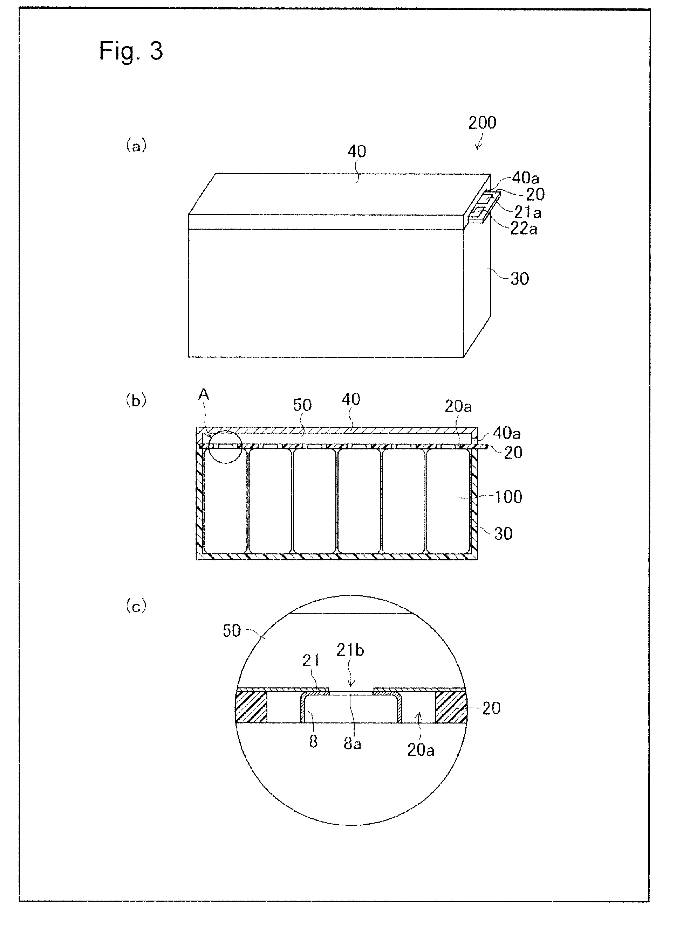

FIG. 2 is an exploded perspective view schematically showing the structure of an assembled battery 200 according to the present embodiment, (a) of FIG. 3 is a perspective view of the assembled battery 200, (b) of FIG. 3 is a cross-sectional view of the assembled battery 200, and (c) of FIG. 3 is a partially enlarged view of a portion represented by A in (b) of FIG. 3.

As shown in FIG. 2, a plurality of (six, in FIG. 2) unit cells (cylindrical cells) 100 arranged in a row are housed in a case 30 to form an assembled battery 200 shown in (a) of FIG. 3. Here, the positive terminals 8 of the unit cells 100 align so as to face in the same direction, and the plurality of unit cells 100 arranged in a row are electrically connected in parallel. Accordingly, even if one of the unit cells 100 included in the assembled battery 200 fails to function in a battery pack constructed by combining battery modules each of which includes the assembled battery 200 as a unit, current supply from the battery pack can be secured.

Specifically, as shown in FIG. 2, a positive electrode connecting plate 21 and a negative electrode connecting plate 22 are formed on a surface of a flat plate 20. As shown in (c) of FIG. 3, the positive electrode connecting plate 21 is connected to the positive terminals 8 of the unit cells 100 via openings 20a formed in the flat plate 20. In addition, the negative terminals of the unit cells 100 (the bottoms of the cell cases 7) are connected to each other via a negative electrode bus bar 23, and are connected to the negative electrode connecting plate 22, 22b formed on the flat plate 20 via conducting parts 24, 24a each extending from a portion of the negative electrode bus bar 23. In this manner, the unit cells 100 are electrically connected in parallel via the positive electrode connecting plate 21 and the negative electrode connecting plate 22 which are formed on the flat plate 20.

As shown in (c) of FIG. 3, the flat plate 20 is placed so as to be in close contact with end portions on one side (on the positive terminal 8 side in the present embodiment) of the unit cells 100. In addition, as shown in (b) of FIG. 3, the open parts 8a of the unit cells 100 are in communication with an exhaust duct 50 provided in a space between the flat plate 20 and a lid 40 via openings 21b of the positive electrode connecting plate 21. Therefore, high-temperature gas exhausted from the open part 8a of a unit cell 100 enters the exhaust duct 50 via the corresponding opening 20a formed in the flat plate 20. Since the exhaust duct 50 is formed so as to be substantially sealed with respect to the plurality of unit cells 100, the high-temperature gas entering the exhaust duct 50 can be released to the outside of the assembled battery 200 via the exhaust duct 50 from an outlet 40a provided in the lid 40, without the circumjacent unit cells 100 being exposed to the gas.

As shown in (a) of FIG. 3, one end of the flat plate 20 extends to the outside from the outlet 40a of the lid 40, and accordingly, a positive electrode terminal 2 1a provided at one end of the positive electrode connecting plate 21 and a negative electrode terminal 22a provided at one end of the negative electrode connecting plate 22 are exposed to the outside. Therefore, it is easy to electrically connect assembled batteries 200 to each other. The flat plate 20 may be a wiring substrate on which the positive electrode terminal 21a, the negative electrode terminal 22a, and a signal terminal (not shown) for inputting/outputting a signal for controlling charge/discharge of the unit cells 100 are formed.

In the assembled battery 200 according to the present invention, the directions in which the positive terminals 8 of the unit cells 100 face, and the relation of electrical connection between the unit cells 100 are not particularly limited, as long as the plurality of unit cells 100 are arranged in a row. For example, the directions in which the positive terminals 8 of the unit cells 100 face may be alternated, that is, may be opposite between one unit cell 100 and another adjacent unit cell 100 so that the unit cells 100 arranged in a row are electrically connected in series. Further, the positive electrode terminal 21 a, the negative electrode terminal 22a, and the signal terminal for inputting/outputting a signal for controlling charge/discharge of the unit cells 100 do not necessarily need to be incorporated in the assembled battery 200.

In addition, the assembled battery 200 does not necessarily need to be housed in the case 30. When the assembled battery 200 is not housed in the case 30, the exhaust duct 50 is not formed in the assembled battery 200. However, as will be described later, if a battery module including a plurality of assembled batteries 200 is housed in a case, it is possible to form an exhaust duct for the battery module.

A battery pack according to the present invention is constructed by assembling a plurality of battery modules. Each of the battery modules is formed by arranging a plurality of assembled batteries 200 each of which is a unit of the battery module and includes a plurality of unit cells 100 arranged in a row.

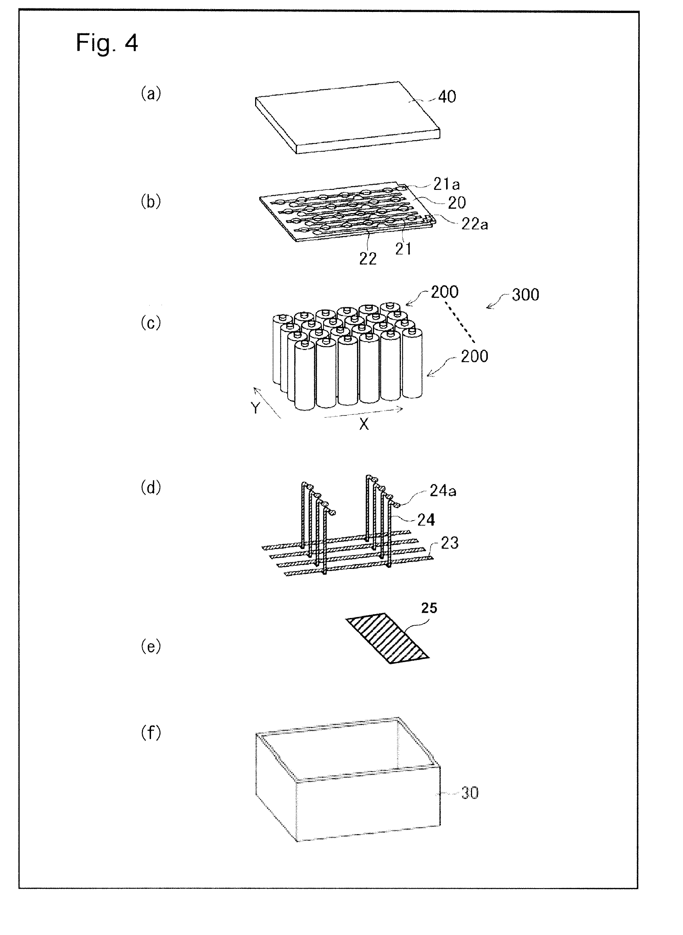

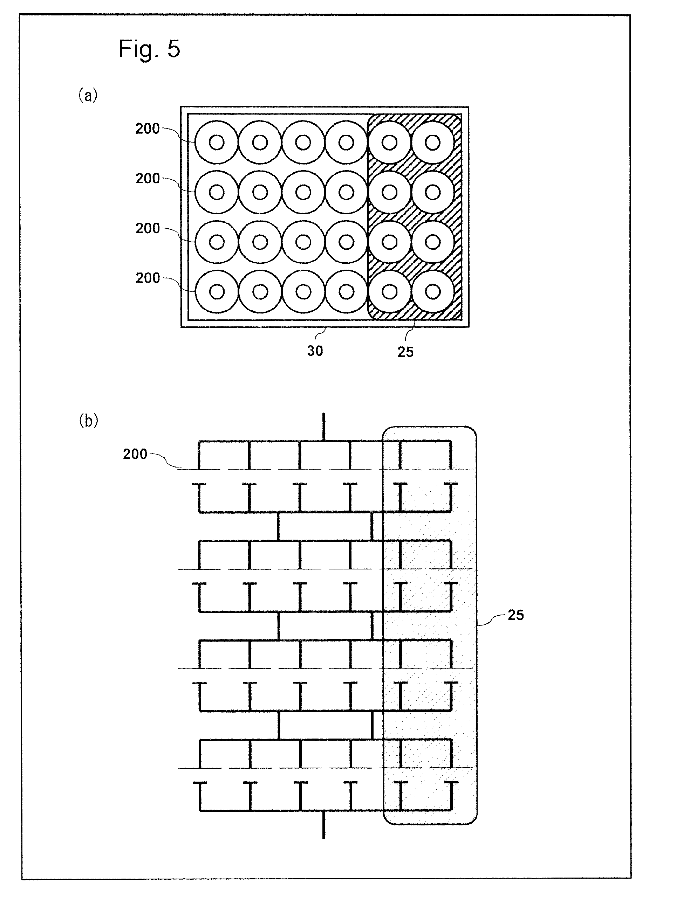

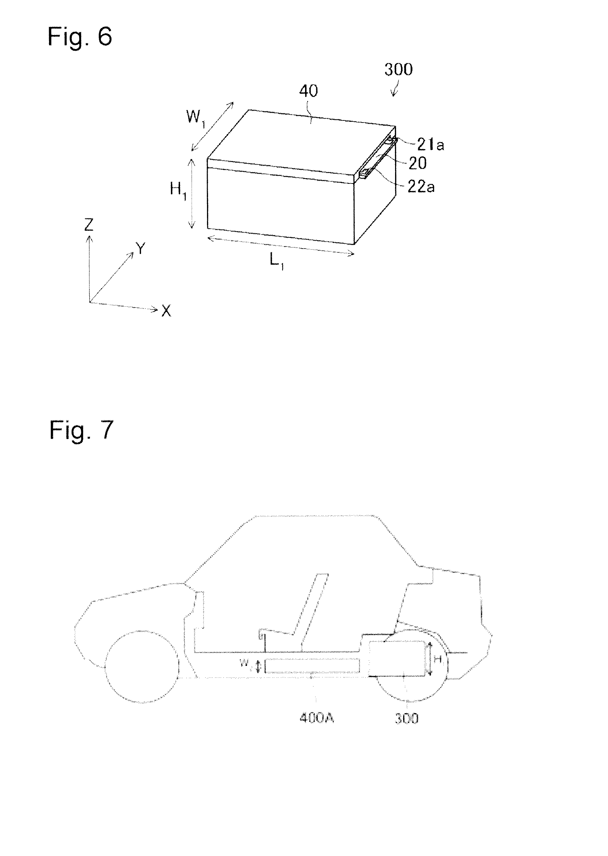

Views (a) to (f) of FIG. 4 are exploded perspective views schematically showing the structure of a battery module 300 according to the present embodiment, (a) and (b) of FIG. 5 are a conceptual diagram and a circuit diagram, respectively, of the battery module according to the embodiment of the present invention, and FIG. 6 is a perspective view of the battery module 300.

As shown in (c) of FIG. 4, the battery module 300 is formed by arranging in series a plurality of (four, in (c) of FIG. 4) assembled batteries 200 each of which includes a plurality of (six, in (c) of FIG. 4) unit cells arranged in a row. Here, "arranging in series" means arranging the plurality of assembled batteries 200 in Y direction perpendicular to X direction (row direction) along which the plurality of unit cells are arranged in a row.

In the battery module 300, the positive electrodes and the negative electrodes of the plurality of assembled batteries 200 which are arranged in parallel rows are electrically connected in series. Specifically, the positive electrode terminals 21 a and the negative electrode terminals 22a of the assembled batteries 200, which are formed on the surfaces of the flat plates 20, are electrically connected in series. The negative terminals (the bottoms of the cells cases) of the unit cells 100 arranged in X direction are connected to each other via the negative electrode bus bar 23, and connected to the negative electrode connecting plate 22 formed on the flat plate 20 via the conducting parts 24 each extending from a portion of the negative electrode bus bar 23.

A temperature regulator 25 for heating some of the unit cells in each of the assembled batteries 200 is located under the negative electrode bus bars 23. In (e) of FIG. 4, the temperature regulator 25 is located on the negative electrode side so as to regulate the temperatures of two cells that are respectively at the fifth and sixth positions in X direction in each of the four rows arranged in Y direction, that is, so as to regulate the temperatures of a total of eight unit cells. Referring to the conceptual diagram, shown in FIG. 5, of the battery module viewed from the positive electrode side, the temperatures of two unit cells are regulated in each of the four assembled batteries which are connected in series. In other words, the temperature regulator 25 is located so as to regulate the temperatures of unit cells in each assembled battery 200 that are adjacent to unit cells in another adjacent assembled battery 200, the temperatures of which unit cells in the adjacent assembled battery 200 are regulated. This makes it possible to quickly regulate the temperatures of some of the unit cells in the assembled batteries 200, whereby early discharge is enabled.

Instead of a flat plate 20 being provided for each assembled battery 200 as shown in FIG. 2, one flat plate 20 may be formed for the whole battery module 300. Further, instead of each assembled battery 200 being housed in a different case 30, the whole battery module 300 may be housed in one case 30, and the case 30 may be covered with a lid 40. In addition, as shown in FIG. 6, one end of the flat plate 20 may extend to the outside from an outlet of the lid 40, and the positive and negative electrode terminals 2 1 a and 22a of the whole battery module 300 may be exposed to the outside. In this case, it is easy to electrically connect battery modules 300 to each other.

FIG. 7 is a schematic diagram showing an example in which a battery pack including a plurality of battery modules is mounted in an automobile. Battery modules 300 are arranged in two tiers in a relatively wide space under the backseat, while battery modules 300 are arranged in a single tier in a narrow space under the floor between the front seat and the backseat. In this manner, the battery modules 300 can be arranged efficiently in the limited spaces.

In addition, the battery pack according to the present invention may be constructed by appropriately combining two or more types of battery modules having different outer dimensions so that the battery pack can output a predetermined voltage and capacitance. The number of the battery modules 300 and the manner of arranging the battery modules 300 may be appropriately selected depending on the size of a space in which the battery pack is mounted.

According to the above described structure, in a battery module including a plurality of assembled batteries which are connected in series and each of which includes a plurality of unit cells connected in parallel, a temperature regulator is provided only for some of the unit cells in each of the assembled batteries. Therefore, a current sufficient to start a vehicle or the like can be discharged early with reduced power consumption.

In the present embodiment, four rows of unit cells are arranged in Y direction, each row including six unit cells arranged in X direction. In addition, the temperature regulator 25 is provided for two unit cells arranged in X direction in each of the four rows arranged in Y direction. However, the numbers of unit cells are not limited to those in the above embodiment. In the case where the number of unit cells arranged in X direction is N, and the number of rows arranged in Y direction is L, the number of unit cells arranged in X direction for which the temperature regulator 25 is provided may be M (M: an integer from I to N-1) in each of the L rows arranged in Y direction.

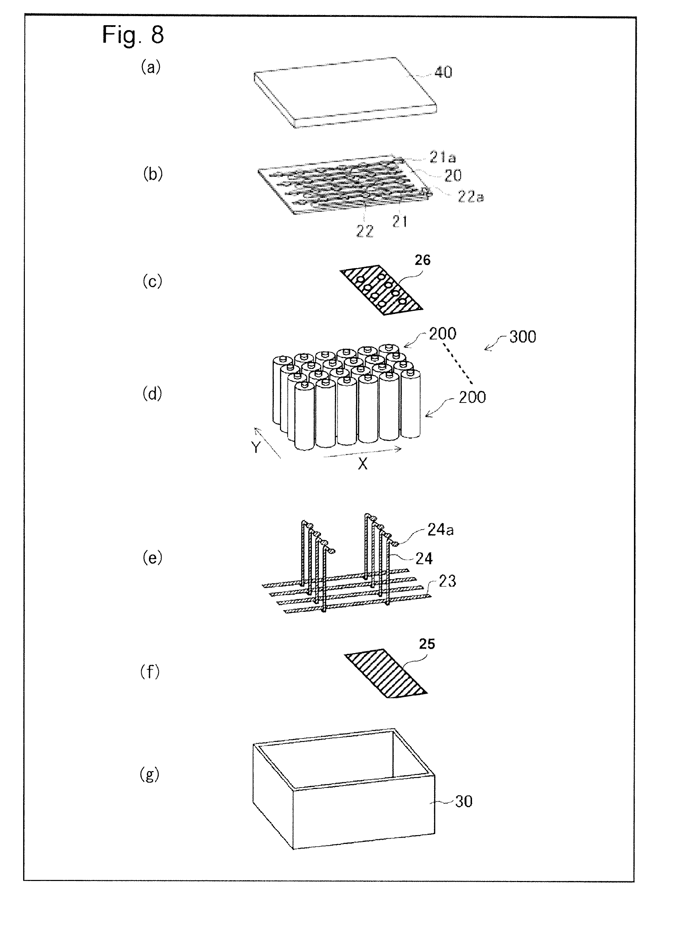

In the present embodiment, the temperature regulator 25 is located on the side of the negative electrodes 2 of the unit cells. However, as shown in FIG. 8, a temperature regulator 26 may further be located on the side of the positive electrodes I of the unit cells, i.e., between the unit cells and the flat plate 20. In this case, the temperature regulator 26 have holes provided at positions corresponding to the positive electrodes 1, and the holes allow the positive electrodes 1 to be in contact with the positive electrode connecting plates 21. Further, the temperature regulator located on the side of the negative electrodes 2 may be removed, and only the temperature regulator located on the side of the positive electrodes I may be used.

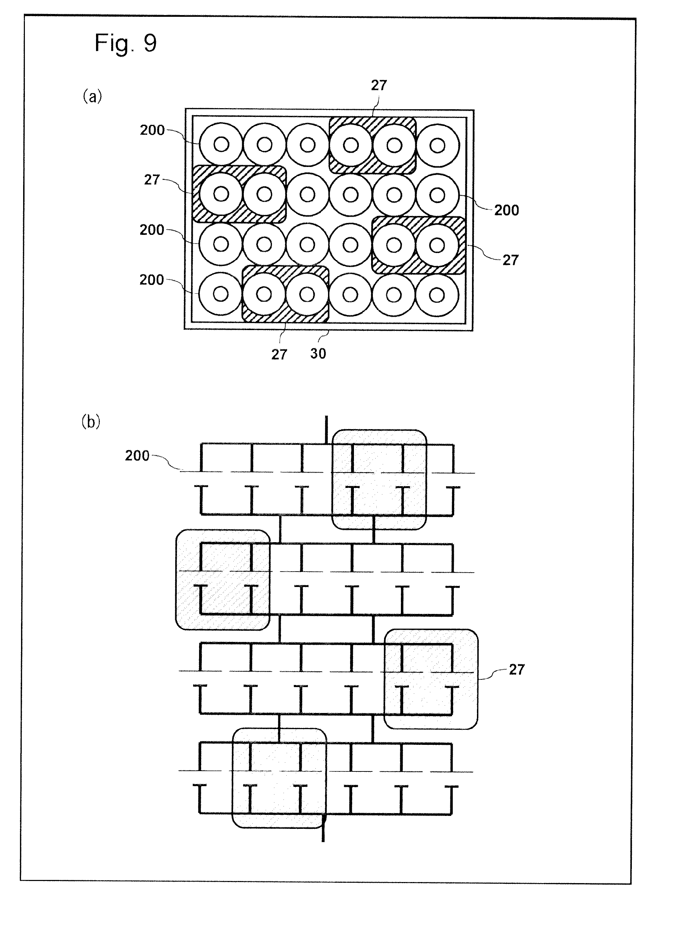

In the present embodiment, the temperature regulator 25 is located so as to regulate the temperatures of unit cells in each assembled battery 200 that are adjacent to unit cells in another adjacent assembled battery 200, the temperatures of which unit cells in the adjacent assembled battery 200 are regulated. However, as shown in FIG. 9, temperature regulators 27 may be located such that each of the temperature regulators 27 regulates the temperatures of unit cells in a corresponding assembled battery 200 that are adjacent to unit cells in another adjacent assembled battery 200, the temperatures of which unit cells in the adjacent assembled battery 200 are not regulated. This also makes it possible to quickly regulate the temperatures of some of the unit cells in each assembled battery 200, whereby a current sufficient to start a vehicle can be discharged early. In addition, since the temperatures of unit cells in the vicinity of the temperature regulators 25 can also be regulated, the temperature of the whole battery module can be regulated with the power consumption of the temperature regulators 25 being small.

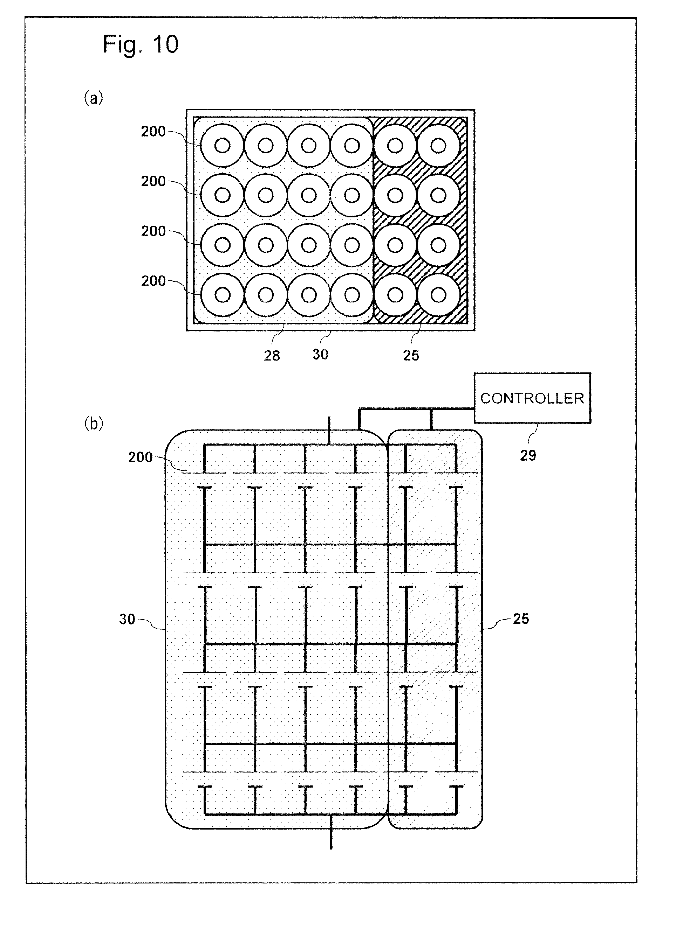

In the present embodiment, the temperature regulator 25 is provided only for some of the unit cells in the assembled batteries 200. However, as shown in FIG. 10, a temperature regulator 28 may be provided for unit cells other than the unit cells of which the temperatures are regulated by the temperature regulator 25. In this case, a controller 29 for controlling the temperature regulator 25 and the temperature regulator 28 is further provided. When a vehicle or the like is started, the controller 29 causes only the temperature regulator 25 to perform temperature regulation, thereby causing discharge from the battery module 300 to be initiated. When a larger amount of electricity needs to be discharged, the temperature regulator 28 is also caused to perform temperature regulation, whereby all of the unit cells are caused to discharge.

In the present embodiment, as shown in FIG. 5, the number of conducting wires for connecting the assembled batteries 200 to each other is two. However, as shown in FIG. 10, conducting wires may be provided for each of the unit cells 100. When the temperature regulator 25 is located along the conducting wires, currents from unit cells 100 in one assembled battery 200 that have been heated by the temperature regulator 25 can be fed, with highest efficiency, to unit cells in another adjacent assembled battery 200 that have been heated.

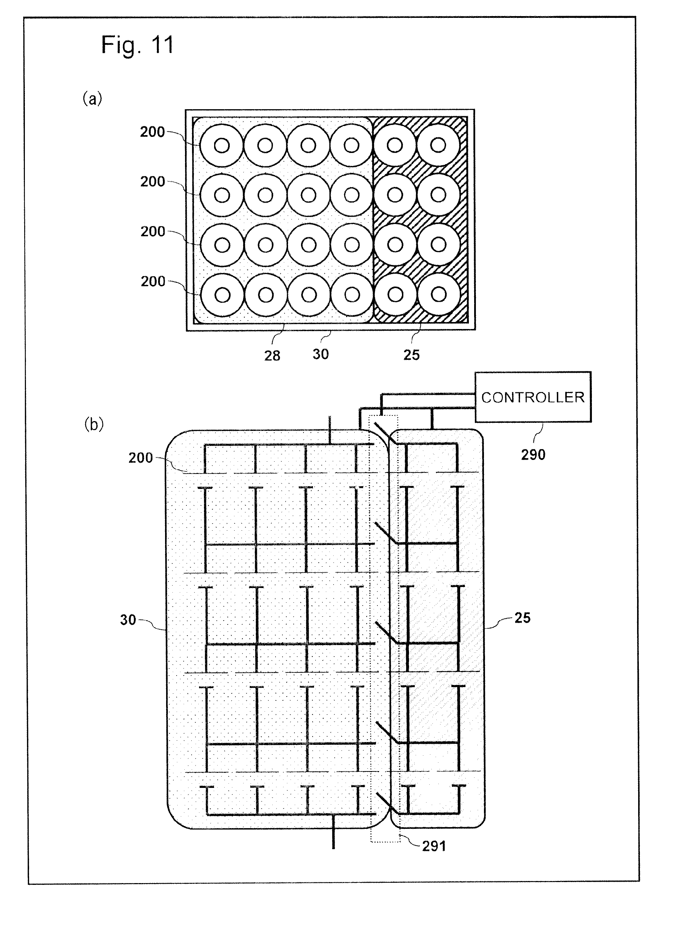

In addition, in the case where conducting wires are provided for each of the unit cells 100 as shown in FIG. 10, a switch 291 may be provided for disconnecting unit cells 100 that are not heated from the circuit, as shown in FIG. 11. The switch 291 is operated by a controller 290 such that all five switches are opened or closed. Specifically, the switch 291 is operated as follows.
(1) When the controller 290 causes the temperature regulator 25 to regulate the temperatures of unit cells 100 and does not cause the temperature regulator 28 to regulate the temperatures of unit cells 100, the controller 290 opens the switch 291 to disconnect the unit cells 100 of which the temperatures have been regulated from the unit cells 100 of which the temperatures have not been regulated, and only the unit cells 100 of which the temperatures have been regulated are caused to discharge.
(2) When the controller 290 causes both the temperature regulator 25 and the temperature regulator 28 to regulate the temperatures of unit cells 100, the controller 290 closes the switch 291, and all of the unit cells 100, the temperatures of which have been regulated, are caused to discharge.

Accordingly, the following advantage can be obtained in the case of (1) described above. If the switch 291 was being closed, currents would flow into the unit cells 100 of which the temperatures have been regulated from the unit cells 100 of which the temperatures have not been regulated because the internal resistances of the unit cells 100 of which the temperatures have been raised are reduced, and as a result, sufficient electric power could not be discharged. Actually, since the switch 291 is opened, only the unit cells 100 of which the temperatures have been regulated are caused to discharge, and thus discharge load can be concentrated only on the unit cells 100 of which the temperatures have been regulated in the battery module 300. The temperatures of the unit cells 100 that are disconnected from the circuit and caused to discharge are further increased due to heat of chemical reaction and/or Joule heat which are generated by the discharge. Consequently, a current sufficient to start a vehicle can be discharged early, and further, the temperature of the whole battery module can be regulated with the power consumption of the temperature regulator 25 being small.

The present invention has been described with reference to the preferred embodiment. However, the above description is not intended to limit the scope of the invention, and it is understood that various modifications can be made. For example, although the above embodiment has described an example in which the assembled batteries 200 included in the battery module 300 are electrically connected in series and arranged linearly in Y direction, the assembled batteries 200 may be arranged in X direction as long as they are electrically connected in series. In addition, the unit cells 100 are cylindrical cells in the above description, but may be prismatic cells. Further, the type of the unit cells is not particularly limited. For example, lithium-ion cells, nickel-hydrogen cells, or the like, can be used.

### INDUSTRIAL APPLICABILITY

The present invention is useful as a power source for driving automobiles, electric motorcycles, electric play equipments, and the like.

### DESCRIPTION OF THE REFERENCE CHARACTERS

- 1: positive electrode
- 2: negative electrode
- 3: separator
- 4: electrode group
- 5: positive electrode lead
- 6: negative electrode lead
- 7: cell case
- 8: terminal plate (positive terminal)
- 8a: open part
- 9, 10: insulating plate
- 11: gasket
- 12: filter
- 12a: through hole
- 13: inner cap
- 13a: through hole
- 14: vent body
- 20: flat plate
- 20a: opening
- 21: positive electrode connecting plate
- 21 a, 22a: electrode terminal
- 21b: opening
- 22: negative electrode connecting plate
- 23: negative electrode bus bar
- 24: conducting part
- 25, 26, 27, 28: temperature regulator
- 30: case
- 40: lid
- 40a: outlet
- 50: exhaust duct
- 100: unit cell
- 200: assembled battery
- 300: battery module

## Claims

1. A battery module comprising:
a unit cell; and
a temperature regulator for regulating the temperature of the unit cell, wherein
a plurality of the unit cells are connected in parallel to form an assembled battery, a plurality of the assembled batteries being connected in series, and
the temperature regulator is located so as to regulate the temperature of at least one unit cell in each of the assembled batteries.

2. The battery module according to claim 1, wherein
the plurality of unit cells are arranged in a plane, and
the temperature regulator is located on at least one of a positive electrode side and a negative electrode side.

3. The battery module according to claim 1, wherein the temperature regulator regulates the temperature of a unit cell in each assembled battery, the unit cell being adjacent to a unit cell in another adjacent assembled battery, the temperature of the unit cell in the adjacent assembled battery being regulated.

4. The battery module according to claim 1, wherein the temperature regulator regulates the temperature of a unit cell in each assembled battery, the unit cell being adjacent to a unit cell in another adjacent assembled battery, the temperature of the unit cell in the adjacent assembled battery being not regulated.

5. A battery module comprising:
a unit cell;
a first temperature regulator and a second temperature regulator for regulating the temperature of the unit cell; and
a controller for controlling the first temperature regulator and the second temperature regulator, wherein
a plurality of the unit cells are connected in parallel to form an assembled battery, a plurality of the assembled batteries being connected in series,
the first temperature regulator is located so as to regulate the temperature of at least one unit cell in each of the assembled batteries,
the second temperature regulator is located so as to regulate the temperatures of other unit cells than the unit cells for which the first temperature regulator is located, and
the controller sets the first temperature regulator to ON and sets the second temperature regulator to OFF when the battery module starts to operate.

6. The battery module according to claim 5, wherein the first temperature regulator is located along unit cells connected in series via a conducting wire connecting the assembled batteries to each other.

7. The battery module according to claim 5, wherein when the first temperature regulator is set at ON and the second temperature regulator is set at OFF by the controller, the unit cells of which the temperatures are regulated by the first temperature regulator, and the unit cells of which the temperatures are regulated by the second temperature regulator, are electrically disconnected from each other.
